# EUROPÄISCHE PATENTSCHRIFT

(11) **EP 0 794 499 B1**
(45) Veröffentlichungstag und Bekanntmachung des Hinweises auf die Patenterteilung: **19.05.2004**
(21) Anmeldenummer: 97103542.3
(22) Anmeldetag: 04.03.1997
(51) Int. Cl.: G06K 7/00

(54) **Datenerfassungsgerät insbesondere in Fahrtenschreibern mit einer Vorrichtung zum Transport und zur Kontaktierung von Datenkarten**
Data aquisition device, especially in tachographs, comprising a device for transporting and contacting data cards
Appareil d'acquisition de données, en particulier dans des tachygraphes, comportant un dispositif pour transporter et contacter des cartes de données

(30) Priorität: 08.03.1996 DE 29604323 U
(43) Veröffentlichungstag der Anmeldung: 10.09.1997
(73) Patentinhaber: Siemens Aktiengesellschaft, 80333 München (DE)
(72) Erfinder: Hügle, Axel, Dipl.-Ing., 78120 Furtwangen (DE)

(56) Entgegenhaltungen:
- EP-A- 0 263 746
- EP-A- 0 313 882
- EP-A- 0 576 338
- WO-A-91/00681
- DE-A- 3 343 727
- FR-A- 2 638 876
- US-A- 4 938 716

## Beschreibung

Die Erfindung betrifft ein Datenerfassungsgerät, insbesondere eines Fahrtenschreibers oder eines einem Fahrtenschreiber zugeordneten Zusatzgerätes, mit einem im Wesentlichen quaderförmigen Gehäuse, mit einer Vorrichtung zum Transport von Datenkarten zwischen einer Eingabe-/Entnahmeposition und einer Lese-/Schreibposition und zur Kontaktierung von Datenkarten in der Lese-/Schreibposition in dem Datenerfassungsgerät, wobei die Datenkarten in der Lese-/Schreibposition, welche durch einen gehäusefest angeordneten Kontaktfedersatz definiert ist, unzugänglich verriegelt sind.

Die Kontrolle der zunehmend komplexer werdenden Arbeitszeitvorschriften für das fahrende Personal im gewerblichen Straßenverkehr macht die Verwendung von mit geeigneten Speichern versehenen, fahrerbezogenen Datenkarten erforderlich, und zwar insbesondere zur Erfassung der Arbeits- und Ruhezeiten. Werden nach wie vor für die Aufzeichnung von Fahrzeugmesswerten Diagrammscheiben oder mit einem entsprechend hohen Speichervolumen ausgestattete elektronische Speicher verwendet, so ist bei einem solchen Datenerfassungsprinzip eine im Hinblick auf die unterschiedlichen Auswertekriterien und die Notwendigkeit von Fahrer- und Fahrzeugwechsel seit langer Zeit geforderte räumliche Trennung bzw. räumliche Trennbarkeit von Arbeitszeitdaten und ausschließlich Fahrzeugmesswerten ohne weiteres gegeben.

Verständlicherweise können die bereits im Feld befindlichen herkömmlichen Fahrtschreiber nur dadurch für die Verwendung von Datenkarten aufgerüstet werden, dass diesen Zusatzgeräte zugeordnet werden, welche wenigstens mit geeigneten Mitteln für das Eingeben/Entnehmen von Datenkarten und deren Kontaktierung ausgerüstet sind und vorzugsweise ein Display sowie geeignete Betätigungsmittel zur Freigabe der Datenkarten und zum Anwählen der Arbeitszeitdaten für deren Darstellung auf dem Display umfassen. Derartige Zusatzgeräte müssen weitgehend autark arbeiten, das heißt sie beinhalten, wie aus der DE-G 94 09 354.7 hervorgeht, einen Mikroprozessor, einen für den zu erfassenden Datenumfang geeigneten Datenspeicher, Schnittstellen für die Pegelanpassung der vom jeweiligen Fahrtschreiber gelieferten Signale sowie eine Uhr und einen Datumsgeber. Bei der geschilderten Entwicklung liegt es nahe das Zusatzgerät zusätzlich als elektronischen Fahrtschreiber auszubauen, indem eine geeignete Prozessorleistung, das notwendige Speichervolumen sowie die erforderlichen Schnittstellen beispielsweise auch zum Auslesen der Fahrzeugmesswerte sowie weitere Betätigungsmittel vorgesehen werden. Der Ausbau kann ferner einen Drucker und/oder eine mobile Speicherkarte insbesondere für die Fahrzeugmesswerte umfassen, wobei der Drucker der visuell lesbaren Darstellung relativ kurzer, gut aufgelöster Zeitabschnitte von Fahrtverläufen dient und die Speicherkarte zweckmäßigerweise für eine verdichtete Erfassung von Fahrzeugmesswerten über einen längeren Zeitbereich vorgesehen sein würde. In jedem Falle, das heißt sowohl im Falle des Zusatzgerätes als auch im Falle des elektronischen Fahrtschreibers gilt bezüglich der Datenkarten, dass sie verriegelbar sind und erst durch Betätigen einer Taste oder durch Eingabe eines Codes freigegeben werden können und dass sie wegen der im Fahrerhaus eines Nutzfahrzeuges in besonderer Weise gegebenen Verschmutzungsgefahr gegen Staub und Wasser geschützt sein müssen. Darüber hinaus besteht bezüglich der Handhabung der Datenkarten die Bedingung, dass die Datenkarten auch im oft schlecht beleuchteten Fahrerhaus und an der Grenze des haptischen Bereichs des Fahrers problemlos eingeb- und entnehmbar sein sollten. Entscheidend ist außerdem, dass ein zur Auf- bzw. Nachrüstung eines bereits installierten Fahrtschreibers gesetzlich verordnetes Zusatzgerät finanziell zumutbar ist, so dass es zwingend erforderlich ist, ein derartiges Gerät mit möglichst geringem Aufwand zu realisieren.

Aus der Europäischen Patentanmeldung EP 0 313 882 A2 ist bereits eine Anordnung zur Aufnahme einer Datenkarte in einer Datenübertragungsposition bekannt, welche in der Lage ist, mehrere Datenkarten gleichzeitig aufzunehmen und zu verriegeln, wobei die Datenkartenaufnahme bevorzugt als eine um eine Achse schwenkbare Klapplade ausgebildet ist. Hinsichtlich Handhabung, Transport und Kontaktierung der Datenkarte genügt diese Anordnung nicht im vollen Umfang den Anforderungen der Praxis, so dass es häufig zu Fehlkontaktierungen der Datenkarte und damit zu unakzeptablen Funktionsausfällen kommt. Aus der Deutschen Offenlegungsschrift DE 33 43 727 A ist bereits ein Kartenleser für eine Kassieryorrichtung und ein Verfahren zum Entwerten einer Werteinheiten enthaltenden Karte bekannt, welche jedoch keine Eignung für einen funktionssicheren Betrieb in einem Fahrtenschreiber aufweist, da keine den einschlägigen Anforderungen genügende Verriegelung in der Lese/Schreibposition der Karte vorgesehen ist.

Die Aufgabe der vorliegenden Erfindung bestand somit darin, eine den genannten Bedingungen hinsichtlich Handhabung, Transport und Kontaktierung von Datenkarten gerecht werdende Lösung zu finden, die sich für die Serienfertigung eignet und möglichst kostengünstig herstell- und montierbar ist.

Die Lösung dieser Aufgabe beschreibt der Anspruch 1. Weitere vorteilhafte Ausgestaltungen ergeben sich aus den Unteransprüchen.

Die vorgeschlagene Lösung bietet ein Höchstmaß an Handhabungskomfort, insbesondere deshalb, weil ein lästiges Einfädeln der Datenkarten in enge, der Dicke der Daterikarten entsprechende Schächte vermieden, gleichzeitig aber auch eine Verriegelung und Zugriffssicherung sowie ein ausreichender Verschmutzungsschutz der Datenkarten gegeben ist. Ferner ist durch das Zusammenwirken von Schublade und der gehäusefesten Rampe eine besonders einfache Vorrichtung für eine Kontaktierung der Datenkarten vorgeschlagen worden. Diese Vorrichtung bietet zusätzlich den Vorteil, daß die Datenkarten gegen die Kontakte angehoben werden und somit Schleifspuren auf den Datenkarten vermieden werden und die Abnutzung der Kontakte reduziert ist. Hervorgehoben sei außerdem, daß die gefundene Lösung eine Anpassung der Kontaktierung aufgrund der gegebenen Toleranzlage auf einfache Weise dadurch möglich macht, daß lediglich die die Höhe der Rampe bestimmende Spritzgußform bezüglich der Rampe nachgearbeitet wird.

Im folgenden sei ein Ausführungsbeispiel der Erfindung anhand der beigefügten Zeichnungen näher erläutert. Es zeigen:
- Figur 1: eine Frontansicht eines für die Zuordnung zu einem Fahrtschreiber vorgesehenen Zusatzgerätes zur Darstellung und Erfassung von Arbeitszeitdaten unter Verwendung von Datenkarten,
- Figur 2: eine perspektivische Darstellung einer in dem Zusatzgerät gemäß Figur 1 vorgesehenen Schublade,
- Figur 3: eine perspektivische Darstellung des Zusatzgerätes unter Weglassung eines Gehäuseoberteils und der diesem zugeordneten Bauteile,
- Figur 4: eine Draufsicht auf die eine Baugruppe bildende Verriegelungseinrichtung,
- Figur 5: eine Seitenansicht des teilweise geschnittenen (Schnittebene A in Fig. 3) Zusatzgerätes gemäß Figur 1.

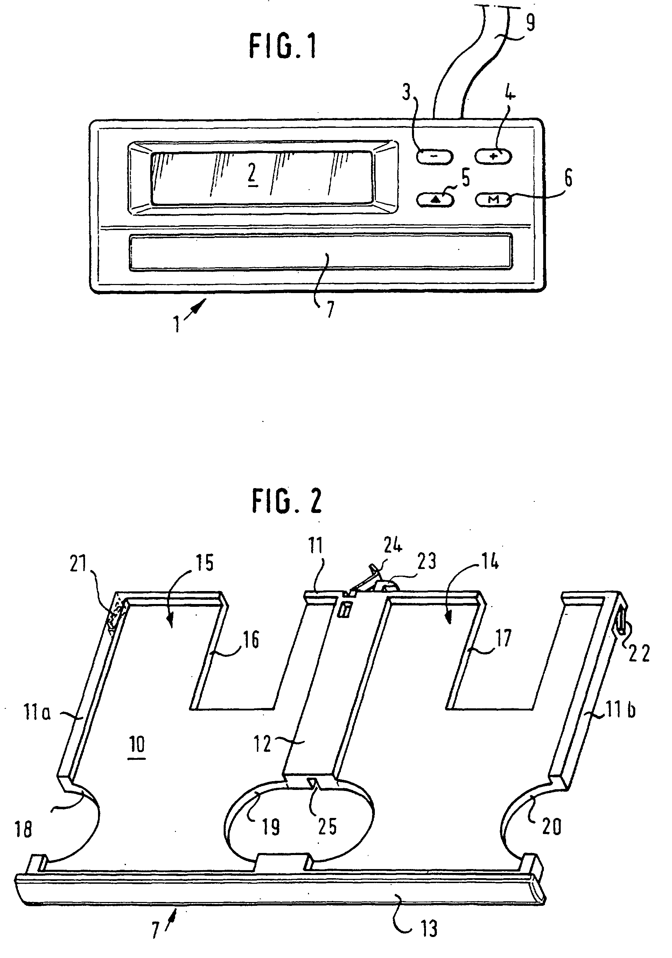

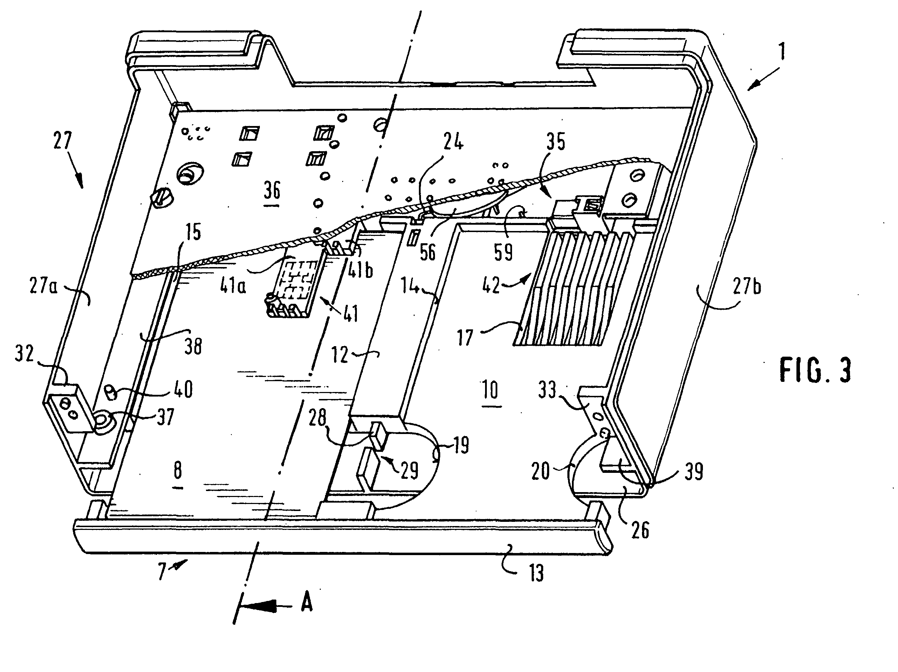

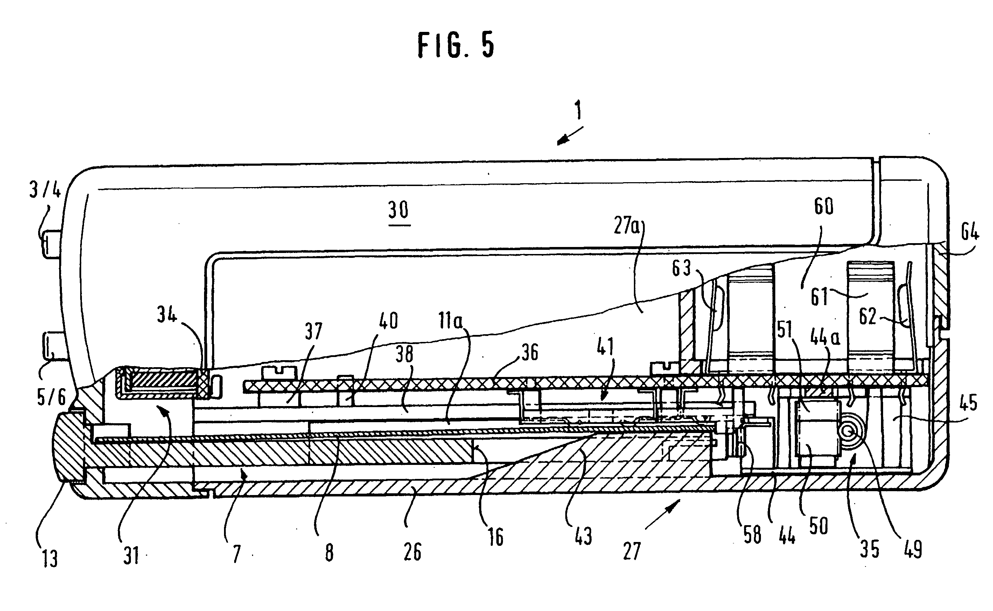

Die mit der Figur 1 dargestellte Frontansicht eines mit 1 bezeichneten Zusatzgerätes zeigt ein Display 2, mehrere Tasten 3, 4, 5 und 6 sowie eine die Datenkarten eines Fahrers und dessen Beifahrers aufnehmende Schublade 7. Eine der Datenkarten ist in den Figuren 3 und 5 mit 8 bezeichnet. Ein mit 9 bezeichnetes Kabel, welches mehrere Signalleitungen und die Energieversorgung des Zusatzgerätes 1 umfaßt, verbindet das Zusatzgerät 1 mit einem nicht dargestellten Fahrtschreiber. Dieser weist bekanntlich Einstellknöpfe auf, mit denen die Arbeitszustände der Fahrer in den Fahrtschreiber eingebbar sind, das heißt, mit denen die Registrierorgane des Fahrtschreibers derart steuerbar sind, daß auf der in einem solchen Fahrtschreiber als Speichermedium verwendeten Diagrammscheibe arbeitsarttypische Registrierungen erfolgen. Gleichzeitig werden die Stellungen der Einstellknöpfe aber auch in das Zusatzgerät 1 übertragen und dort zu Datensätzen für beispielsweise die Dauer und den Zeitpunkt der während der Durchführung eines Transportauftrages zuletzt eingelegten Pause, die Tageslenkzeit, die Lenkzeit seit der letzten Lenkzeitunterbrechung, die Doppelwochenlenkzeit und die letzte beispielsweise 8 Stunden überschreitende Ruhezeit verrechnet und abgelegt. Die Taste 6 dient dem Anwählen der jeweiligen Datenart zur Anzeige auf dem Display 2; mit den Tasten 3 und 4 wird ein "Vor- und Rückwärtsblättern" in den für die angewählte Datenart ermittelten Datensätzen ermöglicht. Die Taste 5 dient dem Öffnen des Zusatzgerätes 1 zur Eingabe bzw. zur Entnahme der Datenkarten 8.

Die in dem Zusatzgerät 1 vorgesehene Schublade 7 wird im wesentlichen gebildet von einem Boden 10, einem Rahmen 11, einer Brücke 12 und einer zusätzlich als Griffleiste dienenden Frontblende 13. Diese Elemente sind derart an der einteilig geformten Schublade 7 ausgebildet, daß sie zwei flache Vertiefungen bilden, die den Datenkarten 8 von Fahrer und Beifahrer als Fassungen 14 und 15 dienen. An der Rückseite der Schublade 7 sind Freisparungen 16 und 17 ausgeformt, welche in noch zu beschreibender Weise der Kontaktierung der Datenkarten 8 dienen. Mit 18, 19 und 20 sind Aussparungen bezeichnet, die ein sicheres Greifen der in der Schublade 7 liegenden Datenkarten 8 ermöglichen. Ferner zeigt die Figur 2, daß an der Schublade 7, und zwar an den durch den Rahmen 11 gebildeten Seitenwänden 11a und 11b, Finger 21 und 22 federungsfähig angeformt sind. Die Finger 21 und 22 gestatten die Erstmontage der Schublade 7, sie wirken nachfolgend jedoch beim Öffnen der Schublade 7 als Endanschläge. Ein mit 23 bezeichneter Haken dient der Verriegelung der Schublade 7 in der geschlossenen Stellung und eine an der Schublade 7 befestigte und mit 24 bezeichnete Blattfeder ist dafür vorgesehen, zwischen den Endpositionen der Schublade 7 eine Rastposition zu schaffen, bei der das Einlegen und Entnehmen von Datenkarten 8 ohne weiteres möglich ist. Sie dient gleichzeitig als Bremselement im Zusammenwirken mit einer Seitenfläche der Rippe 28. In der Brücke 12 ist auf der den Fassungen 14 und 15 abgewandten Seite der Schublade 7 eine Nut 25 ausgebildet, in welche, was aus der Figur 3 hervorgeht, bei montierter Schublade 7 eine am Boden 26 des Gehäuses bzw. des Gehäuseunterteils 27 des Zusatzgerätes 1 angeformte Rippe 28 eingreift. Ein in der Ripe 28 vorgesehener Schlitz 29 stellt die gehäusefeste Kontur dar, mit der die Blattfeder 24 in der Rastposition der Schublade 7 zusammenwirkt.

In der Figur 3 ist die Schublade 7 in ihrer geschlosssenen Stellung dargestellt. Das heißt, ein Gehäuseoberteil 30 und eine frontseitig angeordnete Display- und Tasten-Baueinheit 31 sind in der Figur 3, da sie nicht erfindungswesentlich sind, der Übersichtlichkeit halber weggelassen, in Figur 5 aber dargestellt. Es sei jedoch darauf hingewiesen, daß die mit 32 und 33 bezeichneten, an den Seitenwänden 27a und 27b des Gehäuseunterteils 27 angeformten Wandelemente dem Befestigen einer die Display- und Tasten-Baueinheit 31 tragenden Leiterplatte 34 dienen. Der nicht näher bezeichnete Raum des Zusatzgerätes 1, in welchem die Schublade 7 geführt und eine der Ver- und Entriegelung der Schublade 7 dienende und als Baugruppe ausgebildete Verriegelungseinrichtung 35 angeordnet ist, ist durch eine Leiterplatte 36 abgedeckt, auf der, von den elektronischen Bauelementen auf der Leiterplatte 34 abgesehen, die elektronischen Funktionsbauteile des Zusatzgerätes 1 und beispielsweise eine Hilfspannungsquelle sowie ein oder mehrere Steckersockel für die verschiedenen im Kabel 9 zusammengefaßten Leitungen angeordnet sind. Die Leiterplatte 36 ist unter Zwischenlage von Distanzbuchsen, von denen eine mit 37 bezeichnet ist, auf an den Seitenwänden 27a und 27b angeformten Leisten 38 und 39 befestigt, wobei in gleicher Weise wie die Distanzbuchsen spritzgießtechnisch angeformte Stifte 40 der genauen Lagefixierung der Leiterplatte 36 dienen. Ferner sind an der Leiterplatte 36 den Fassungen 14, 15 zugeordnete, das heißt gegen die Schublade 7 weisende Kontaktfedersätze, von denen einer in Figur 3 dargestellt und mit 41 bezeichnet ist, befestigt. Die Kontaktfedersätze 41 bestehen jeweils aus zwei Gruppen von Kontaktfedern 41a und 41b, von denen die Kontaktfedern 41a der Kontaktierung der Datenkarten 8 dienen und die Kontaktfedern 41b dazu vorgesehen sind, als Startschalter für das Auslösen einer Prüfroutine zu dienen.

Aus den Figuren 3 und 5 ist ferner ersichtlich, daß mehrere am Boden 26 des Gehäuseunterteils 27 angeformte Rippen bei geschlossener Schublade 7 in die Freisparungen 16 und 17 eingreifen. Die Rippen bilden jeweils Rampen 42 bzw. 43, die den Boden 10 der Schublade 7 um ein geringes Maß überragen, so daß beim Schließen der Schublade 7 die in den Fassungen 14, 15 liegenden Datenkarten 8 gegen die Kontaktfedersätze 41 angehoben werden. An dieser Stelle sei noch ergänzt, daß die seitliche Führung der Schublade 7 durch die Nut-Rippe-Verbindung 25, 28 erfolgt. Senkrecht hierzu ist die Schublade 7 dadurch geführt, daß die Seitenwände 11a und 11b an den Unterseiten der Leisten 38 und 39 anliegen und gleichzeitig die.Schublade 7 sich auf der Stirnseite der Rippe 28 abstützt. Diese Art der Führung kann, da enge Herstelltoleranzen vorgesehen werden können, weitgehend spielfrei gestaltet werden.

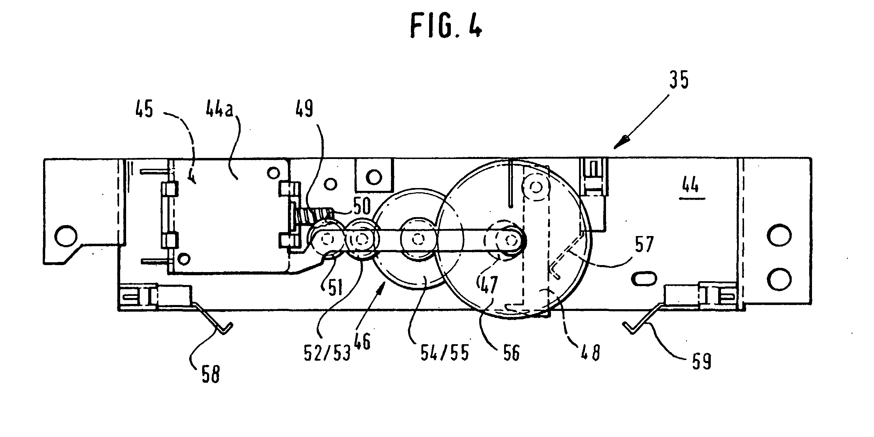

Die Figur 4 zeigt die bereits erwähnte Verriegelungseinrichtung 35. Diese umfaßt einen auf einer an der Leiterplatte 36 befestigbaren Platine 44 angeordneten Elektromotor 45, ein zwischen der Platine 44 und einem Lagerteil 44a angeordnetes Getriebe 46 und einen gefedert gelagerten, mittels eines Exzenters 47 im Sinne einer Entriegelung der Schublade 7 betätigbaren Riegel 48, welcher bei verriegelter Schublade 7 mit dem Haken 23 in Eingriff steht. Der Kraftfluß erfolgt ausgehend von einer auf der nicht bezeichneten Welle des Elektromotors 45 angeordneten Schnecke 49, die mit einem Schneckenrad 50 in Eingriff steht, über ein gleichachsig mit dem Schneckenrad 50 angeordnetes Zahnrad 51, ein gleichachsig gelagertes Zahnradpaar 52/53, ein weiteres gleichachsig gelagertes Zahnradparr 54/55 auf ein Zahnrad 56, welchem der Exzenter 47 zugeordnet ist. Mit 57 ist die mit dem Riegel 48 zusammenwirkende Feder bezeichnet, die Blattfedern 58 und 59 dienen nach dem Entriegeln dem Verschieben der Schublade 7 in eine Greifposition. Damit beim Zurückschieben der Schublade 7 aus der Einlege-/Entnahmeposition in die Lese-/Schreibposition eine Verriegelung, und zwar eine selbsttätige Verriegelung der Schublade 7 erfolgen kann, führt der Exzenter 47, ausgelöst durch ein mittels der Taste 5 gegebenes Entriegelungssignal, eine ganze Umdrehung aus. Es sei an dieser Stelle nochmals hervorgehoben, daß das gewählte Eingabe-/Entnahmeprinzip insbesondere im Anwendungsmilieu in besonderer Weise handhabungsfreundlich ist, indem, nach dem motorischen Entriegeln und in eine Greifposition Verschieben, die Schublade mit einem Handgriff in die Entnahme-/Einlegeposition aufgezogen werden kann und durch ein wenig Sorgfalt erforderndes Zuschieben und Verrasten der Schublade die Datenkarten in die Lese-/Schreibposition gebracht werden können. Erwähnt sei ferner, daß die bei dem beschriebenen Ausführungsbeispiel vorgesehene Lösung zur Führung der Schublp + 2Xade bei entsprechender Gestaltung auch bei einer nur eine Datenkarte aufnehmende Schublade anwendbar ist.

Aus der Figur 5 ist ersichtlich, daß über der Leiterplatte 36 eine der Aufnahme einer Hilfsbatterie und der Abgrenzung von Steckersockeln dienende Kammer 60 angeordnet ist. Mit 61 ist eine von mehreren die nicht dargestellte Hilfsbatterie haltenden Klammern bezeichnet; 62 und 63 stellen der Hilsbatterie zugeordnete Kontaktfedern dar. Eine die Kammer 60 abdeckende Haube ist mit 64 bezeichnet.

## Patentansprüche

1. Datenerfassungsgerät (1), insbesondere eines Fahrtschreibers oder eines einem Fahrtschreiber zugeordneten Zusatzgerätes,
- mit einem im Wesentlichen quaderförmigen Gehäuse,
- mit einer Vorrichtung zum Transport von Datenkarten zwischen einer Eingabe-/Entnahmeposition und einer Lese-/Schreibposition und zur Kontaktierung von Datenkarten in der Lese-/Schreibposition in dem Datenerfassungsgerät,
- wobei die Datenkarten in der Lese-/Schreibposition, welche durch einen gehäusefest angeordneten Kontakfedersatz definiert ist, unzugänglich verriegelt sind,
**gekennzeichnet durch**,
- eine in dem Datenerfassungsgerät (1) verschiebbar gelagerte Schublade (7), in welcher eine der Aufnahme von Datenkarten (8) dienende Fassung (14, 15) derart ausgebildet ist, dass die Datenkarten (8) lose einlegbar sind,
- eine im Boden (10) der Schublade (7) vorgesehene, in Bewegungsrichtung der Schublade (7) einseitig offene Freisparung (16, 17),
- eine am Gehäuse (Gehäuseunterteil 27) des Datenerfassungsgerätes (1) derart ausgebildete Rampe (42, 43), dass sie in der Lese-/Schreibposition der Schublade (7) in die Freisparung (16, 17) eingreift und
- **dadurch**, dass der Kontaktfedersatz (41) in einem die Abtastung der Kontakte der Datenkarten (8) gestattenden Abstand über der Rampe (42, 43) angeordnet ist.

2. Vorrichtung nach Anspruch 1, **dadurch gekennzeichnet, dass** die Schublade (7) für die gleichzeitige Aufnahme von zwei Datenkarten (8) ausgebildet ist, wobei die vorgesehenen Fassungen (14, 15) im Wesentlichen in einer Ebene liegen und jeweils Freisparungen (16, 17) und im Gehäuse (Gehäuseunterteil 27) ausgebildete Rampen (42, 43) vorgesehen sind.

3. Vorrichtung nach Anspruch 2, **dadurch gekennzeichnet, dass** die Schublade (7) in ihrer Bewegungsebene mittels einer am Gehäuse (Gehäuseunterteil 27) ausgebildeten und in eine in der Schublade (7) vorgesehene Nut (25) eingreifende Rippe (28) geführt ist.

4. Vorrichtung nach Anspruch 3, **dadurch gekennzeichnet, dass** die Schublade (7) rechtwinklig zur Bewegungsebene zwischen der Stirnfläche der Rippe (28) und an den Seitenwänden (27a, 27b) angeformten Leisten (38, 39) geführt ist.

5. Vorrichtung nach Anspruch 1, **dadurch gekennzeichnet, dass** der Schublade (7) eine Verriegelungseinrichtung (35) zugeordnet ist, und dass an der Schublade (7) wenigstens eine Feder (58, 59) derart angreift, dass die Schublade (7) nach dem Entriegeln in eine Griffposition verschoben wird.

6. Vorrichtung nach Anspruch 1, **dadurch gekennzeichnet, dass** die Verriegelungseinrichtung (35) eine mittels eines Exzenters (47) außer Eingriff mit der Schublade (7) bringbaren, gefedert gelagerten Riegel (48, 57) umfasst.

7. Vorrichtung nach Anspruch 6, **dadurch gekennzeichnet, dass** die Verriegelungseinrichtung (35) als eine in das Gehäuse einsetzbare Baugruppe ausgebildet ist, welche außer dem gefedert gelagerten Riegel (48, 57) einen Elektromotor 45, ein zwischen diesem und dem Exzenter (47) vorgesehenes Getriebe (46) sowie Federn (58, 59), welche nach einem Entriegeln dem Verschieben der Schublade (7) in eine Greifposition dienen, umfasst.

8. Vorrichtung nach Anspruch 1, **dadurch gekennzeichnet, dass** zur Markierung der Einlege-/Entnahmeposition der Schublade (7) einer an der. Schublade (7) angebrachten Blattfeder (24) eine gehäusefeste Aussparung (29) zugeordnet ist.

9. Vorrichtung nach Anspruch 1, **dadurch gekennzeichnet, dass** die Kontaktfedersätze (41) und die Verriegelungseinrichtung (36) unmittelbar an einer Leiterplatte (36) angeordnet sind, welche auf den Leisten (38, 39) befestigt ist.

## Claims

1. Data acquisition device (1), in particular of a tacograph or of a supplementary device assigned to a tacograph,
- having an essentially parallelepiped-shaped housing,
- having a device for conveying data cards between an insertion/removal position and a reading/writing position and for making contact with the data cards in the reading/writing position in the data acquisition device,
- the data cards being inaccessibly locked in the reading/writing position which is defined by a set of spring contacts which are arranged fixed to the housing, **characterized by**
- a drawer (7) which is displaceably mounted in the data acquisition device (1) and in which a accommodating element (14, 15) which has the purpose of holding data cards (8) is formed in such a way that the data cards (8) can be inserted loosely
- a cutout (16, 17) which is provided in the bottom (10) of the drawer (7) and is open on one side in the direction of movement of the drawer (7),
- a ramp (42, 43) which is formed on the housing (lower part 27 of the housing) of the data holding device (1) in such a way that in the reading/writing position of the drawer (7) it engages in the cutout (16, 17), and
- **characterized in that** the set of spring contacts (41) is arranged above the ramp (42, 43) at a distance which permits the contacts of the data cards (8) to be sensed.

2. Device according to Claim 1, **characterized in that** the drawer (7) is designed to take two data cards (8) simultaneously, the accommodating elements (14, 15) provided essentially lie on a plane and respective cutouts (16, 17) and ramps (42, 43) formed on the housing (lower part 27 of the housing) are provided.

3. Device according to Claim 2, **characterized in that** the drawer (7) is guided in its plane of movement by means of a rib (28) which is formed on the housing (lower part 27 of the housing) and engages in a groove (25) which is provided in the drawer (7).

4. Device according to Claim 3, **characterized in that** the drawer (7) is guided at right angles to the plane of movement between the end face of the rib (28) and ledges (38, 39) which are formed on the side walls (27a, 27b).

5. Device according to Claim 1, **characterized in that** a locking device (35) is assigned to the drawer (7), and **in that** at least one spring (58, 59) engages on the drawer (7) in such a way that the drawer (7) is displaced into a gripping position after the unlocking operation.

6. Device according to Claim 1, **characterized in that** the locking device (35) comprises a bolt (48, 57) which can be disengaged from the drawer (7) by means of an eccentric (47) and is spring mounted.

7. Device according to Claim 6, **characterized in that** the locking device (35) is designed as an assembly which can be inserted into the housing and which comprises, apart from the spring mounted bolt (48, 57), an electric motor (45), a gear mechanism (46) which is provided between the latter and the eccentric (47), and springs (58, 59) which, after the unlocking operation, have the purpose of displacing the drawer (7) into a gripping position.

8. Device according to Claim 1, **characterized in that**, in order to mark the insertion/removal position of the drawer (7), a gap (29) which is fixed to the housing is assigned to a leaf spring (24) which is mounted on the drawer.

9. Device according to Claim 1, **characterized in that** the sets (41) of contact springs and locking device (36) are arranged directly on a printed circuit board (36) which is mounted on the ledges (38, 39).

## Revendications

1. Appareil d'acquisition de données (1) notamment d'un tachygraphe ou d'un appareil complémentaire associé à un tachygraphe
- avec un boîtier sensiblement en forme de parallélépipède,
- avec un dispositif pour le transport de cartes de données entre une position d'insertion/de retrait et une position de lecture/d'écriture et pour la connexion de cartes de données dans la position de lecture/d'écriture au sein de l'appareil d'acquisition de données,
- les cartes de données étant verrouillées de façon inaccessible dans la position de lecture/d'écriture qui est définie par un jeu de ressorts de contact disposé de façon fixe sur le boîtier,
**caractérisé par**
- un tiroir (7), logé de façon déplaçable dans l'appareil d'acquisition de données (1), dans lequel un support (14, 15) servant à loger des cartes de données (8) est conçu de façon à permettre l'insertion de cartes de données mobiles (8),
- un évidement (16, 17) prévu dans le fond (10) du tiroir (7) et ouvert sur un côté dans le sens de déplacement du tiroir (7),
- une rampe (42, 43), formée sur le boîtier (partie inférieure du boîtier 27) de l'appareil d'acquisition de données (1) de façon à s'accrocher dans l'évidement (16, 17), lorsque le tiroir (7) est en position de lecture/d'écriture et
- en ce que le jeu de ressorts de contact (41) est disposé au-dessus de la rampe (42, 43), à une distance autorisant le balayage des contacts des cartes de données (8).

2. Dispositif selon la revendication 1, **caractérisé en ce que** le tiroir (7) est conçu pour loger simultanément deux cartes de données (8), les supports (14, 15) prévus se situant sensiblement sur un même plan et des évidements (16, 17) et des rampes (42, 43) conçues dans le boîtier (partie inférieure du boîtier 27) étant respectivement prévues.

3. Dispositif selon la revendication 2, **caractérisé en ce que** le tiroir (7) est guidé sur son plan de déplacement par une nervure (28) formée sur le boîtier (partie inférieure du boîtier 27) et s'accrochant dans une rainure (25) prévue dans le tiroir (7).

4. Dispositif selon la revendication 3, **caractérisé en ce que** le tiroir (7) est guidé perpendiculairement au plan de déplacement entre la surface frontale de la nervure (28) et des barrettes (38, 39) réalisées sur les parois latérales (27a, 27b).

5. Dispositif selon la revendication 1, **caractérisé en ce qu'**un système de verrouillage (35) est associé au tiroir (7) et **en ce qu'**au moins un ressort (58, 59) s'accroche au tiroir (7) de façon à ce qu'après son déverrouillage, le tiroir (7) soit déplacé dans une position de préhension.

6. Dispositif selon la revendication 1, **caractérisé en ce que** le système de verrouillage (35) comprend un verrou (48, 57) pouvant être décroché du tiroir (7) à l'aide d'un excentrique et qui est logé sur ressort.

7. Dispositif selon la revendication 6, **caractérisé en ce que** le système de verrouillage (35) est conçu sous forme d'un ensemble intégrable dans le boîtier, qui hormis le verrou (48, 57) logé sur ressort comprend un moteur électrique 45, un mécanisme de transmission (46) prévu entre ce dernier et l'excentrique (47), ainsi que des ressorts (58, 59) qui, à l'issue d'un déverrouillage, servent à déplacer le tiroir (7) dans une position de préhension.

8. Dispositif selon la revendication 1, **caractérisé en ce que** pour le marquage de la position d'insertion/de retrait du tiroir (7), un évidement (29) fixe au boîtier est associé à un ressort à lames (24) monté sur le tiroir (7).

9. Dispositif selon la revendication 1, **caractérisé en ce que** les jeux de ressorts de contact (41) et le système de verrouillage (36) sont directement disposés sur un circuit imprimé (36) qui est fixé sur les baguettes (38, 39).
